# EUROPÄISCHE PATENTSCHRIFT

(11) **EP 1 583 682 B1**
(45) Veröffentlichungstag und Bekanntmachung des Hinweises auf die Patenterteilung: **20.05.2009**
(21) Anmeldenummer: 03815056.1
(22) Anmeldetag: 12.12.2003
(51) Int. Cl.: B62D 25/16

(54) **FAHRZEUG MIT EINEM STÜTZTRÄGER FÜR EINEN KOTFLÜGEL**
VEHICLE WITH A SUPPORT CARRIER FOR A MUD GUARD
VÉHICULE AVEC UN SUPPORT POUR UNE AILE

(30) Priorität: 15.01.2003 DE 10301183
(43) Veröffentlichungstag der Anmeldung: 12.10.2005
(73) Patentinhaber: Bayerische Motoren Werke Aktiengesellschaft, 80809 München (DE)
(72) Erfinder: DRAGOI, Cristian, 81477 München (DE)
(74) Vertreter: Schernhammer, Herbert
(86) Internationale Anmeldenummer: PCT/EP2003/014164
(87) Internationale Veröffentlichungsnummer: WO 2004/062986

(56) Entgegenhaltungen:
- EP-A- 1 153 823
- DE-A- 2 911 610
- DE-B- 10 246 589
- DE-U- 1 837 429
- JP-A- 7 291 147
- US-A- 2 974 977

## Beschreibung

Die Erfindung betrifft ein Fahrzeug mit einem Stützträger für einen Kotflügel, wie er in der JP 07-291147 A beschrieben ist.

Aufgabe der Erfindung ist es, einen Weg aufzuzeigen, durch den bei Varianten innerhalb einer Fahrzeugbaureihe entweder ein sportliches oder ein limousinenartiges äußeres Erscheinungsbild des Fahrzeuges erreicht wird, bei möglichst geringen Entwicklungs- und Herstellkosten und möglichst großer Stabilität der Anbindung der Kotflügel.

Diese Aufgabe wird durch ein Fahrzeug mit den Merkmalen des Anspruchs 1 gelöst.

Hierbei wird der Stützträger für einen Kotflügel so ausgestaltet, dass er treppenartig abgestuft ist und wenigstens zwei unterschiedliche Anbindungsbereiche zur Befestigung eines Kotflügels aufweist. Somit können für zwei oder mehrere Fahrzeugvarianten, die sich äußerlich zumindest im Bereich des Kotflügels und/oder der Fronthaube unterscheiden, einheitliche Stützträger verwendet werden. Hierdurch ergibt sich eine Reduzierung der Teilevielfalt, verbunden mit einer Senkung der Herstellkosten, da die Logistik im Rohbau der Fahrzeugkarosserie vereinfacht wird und die Herstellung der Stützträger in größerer Stückzahl billiger ist.

Durch die Befestigung der Kotflügel der einzelnen Fahrzeugvarianten an jeweils unterschiedlichen Anbindungsbereichen des einheitlichen Stützträgers ergibt sich für die Fahrzeugvarianten ein unterschiedlicher Fugenverlauf zwischen Kotflügel und Fronthaube, der zusammen mit der unterschiedlichen äußeren Form der Kotflügel und Fronthauben das äußere Erscheinungsbild eines Fahrzeuges maßgeblich beeinflusst.

Die Erfindung lässt sich mit großen Vorteilen insbesondere bei "Derivaten" innerhalb einer Fahrzeugbaureihe anwenden, die sich beispielsweise in der Karosserieform (Limousine, Coupé, Fließheck, Kombinationsbauart, Cabrio, Roadster etc.) unterscheiden. Mit der Erfindung ist es somit insbesondere möglich, Derivate innerhalb einer "Fahrzeugfamilie" mit unterschiedlichem äußeren Erscheinungsbild herzustellen. Ein weiteres Anwendungsfeld sind beispielsweise Modellüberarbeitungen von Fahrzeugen, bei denen das äußere Erscheinungsbild mit möglichst geringem Kostenaufwand verändert werden soll.

Erfindungsgemäß erfolgt bei einer sportlichen Variante einer Fahrzeugbaureihe die Anbindung des Kotflügels tiefer und/oder weiter außenliegend als bei einer Limousine derselben Baureihe.

Erfindungsgemäß ist der Stützträger treppenartig abgestuft. Die einzelnen Stufen des Stützträgers können über dessen Längserstreckung eine unterschiedliche Breite und/oder Höhe aufweisen, entsprechend der gewünschten Kontur des Kotflügels und/oder der Fronthaube. Hierdurch kann der Fugenverlauf in allen drei Raumrichtungen beeinflusst werden.

Bevorzugt verlaufen die einzelnen Anbindungsbereiche des Stützträgers etwa horizontal. Eine geringe Abweichung von der Horizontalen ergibt sich in der Regel durch die im Frontbereich üblicherweise leicht ansteigende Fahrzeugkontur. Durch die Ausbildung von zwei oder mehr übereinanderliegenden Anbindungsbereichen für die Kotflügel der einzelnen Fahrzeugvarianten ist es möglich, die Fuge zwischen Kotflügel und Fronthaube unterschiedlich hoch verlaufen zu lassen und damit die Fahrzeughöhe im vorderen Bereich zumindest optisch unterschiedlich hoch erscheinen zu lassen. In ähnlicher Weise beeinflusst eine Variation der Lage der Fuge in Fahrzeugquerrichtung den optischen Eindruck der Fahrzeugbreite.

Neben der oben beschriebenen Variation der Höhen- und Breitenlage der Trennfuge kann selbstverständlich der Verlauf der Trennfuge in allen drei Raumrichtungen beeinflusst werden, unter Verwendung entsprechend gestalteter Kotflügel und Fronthauben, bei einheitlichen Stützträgern.

Die Erfindung lässt sich bevorzugt im Frontbereich eines Kraftfahrzeuges anwenden. Aus diesem Grund ist zur sprachlichen Vereinfachung der Wortlaut der Patentansprüche auf Kotflügel und Fronthauben beschränkt. Grundsätzlich sind vom Wortlaut der Patentansprüche jedoch auch Stützträger für den Heckbereich von Fahrzeugen umfasst, in gleicher Weise wie Fahrzeuge, die einen entsprechend gestalteten Heckbereich für einen einheitlichen Stützträger mit mehreren Anbindungsbereichen für die hinteren Seitenwandbereiche aufweisen, wobei die oberen Endabschnitte der Seitenwandbereiche unmittelbar an eine Heckklappe eines derartigen Fahrzeuges angrenzen.

Ein mögliches Ausführungsbeispiel der Erfindung ist in der Zeichnung dargestellt und wird nachfolgend näher beschrieben. Es zeigt:
- Fig. 1 und 3: perspektivische Ansichten einer teilweise geschnittenen Vorderwagenstruktur, mit einem hoch angesetzten bzw. einem tief angesetzten Kotflügel und
- Fig. 2 und 4: Vertikalschnitte durch die Vorderwagenstrukturen der Figuren 1 bzw. 3, mit einem hoch angesetzten und einem tief angesetzten Kotflügel im Querschnitt.

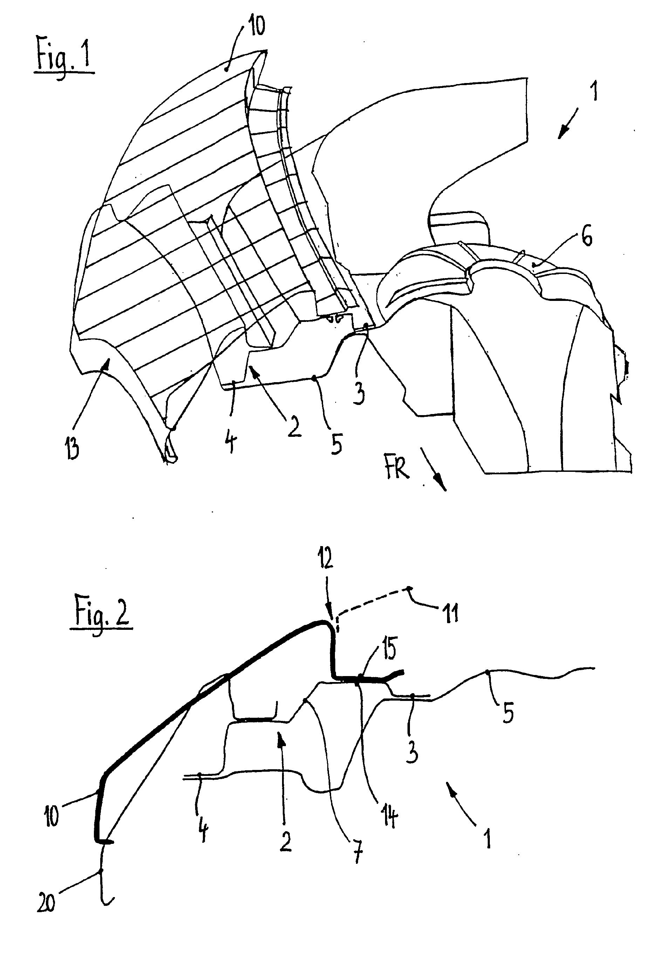

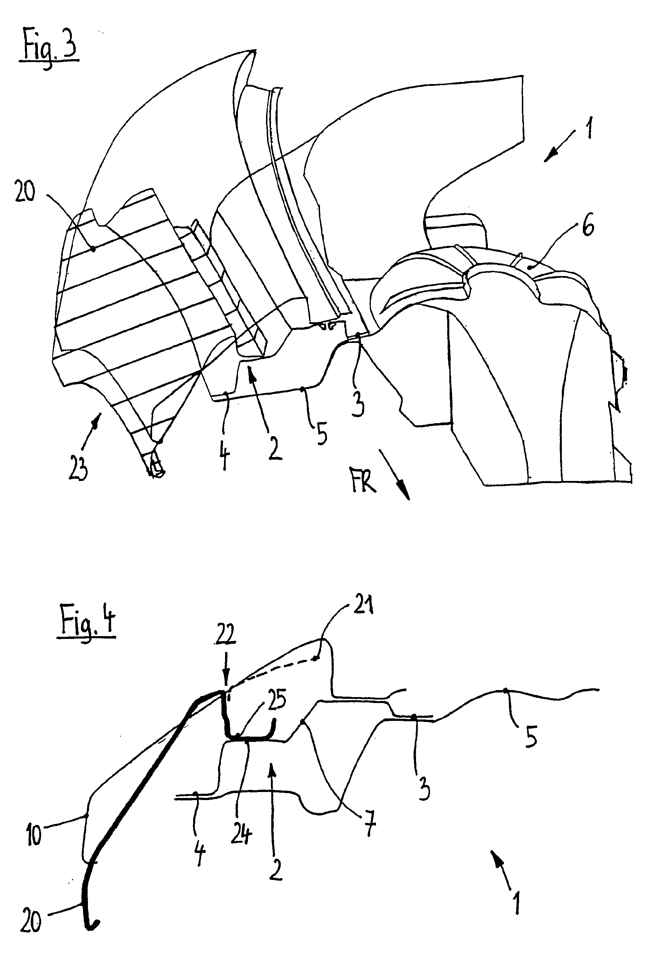

Die Fig. 1 und 3 zeigen, mit Blick entgegen der Fahrtrichtung FR, jeweils einen Teil einer Vorderwagenstruktur 1, die seitlich mit einem ersten Kotflügel 10 (in Figur 1 schraffiert dargestellt) und einem zweiten Kotflügel 20 (in Figur 3 schraffiert dargestellt) beplankt ist. Die unterschiedlich gestalteten Kotflügel 10 und 20 überdecken dabei jeweils eine einheitliche Vordervagenstruktur 1 mit einheitlichen Stützträgern 2. Jeder Stützträger 2 ist mit einem unteren und einem oberen Flansch 3 und 4 auf eine Tragstruktur 5 aufgesetzt. Die Tragstruktur 5 umfasst unter anderem eine Federbeinaufnahme 6, die in den Fig. 1 und 3 teilweise geschnitten ist.

Die Fig. 2 und 4 zeigen die Vorderwagenstruktur 1 der Fig. 1 und 3 im Querschnitt, mit dem ersten Kotflügel 10 (in Figur 2 mit großer Strichstärke dargestellt) und dem zweiten Kotflügel 20 (in Figur 4 mit großer Strichstärke dargestellt), wobei die angrenzenden Fronthauben 11 und 21 mit strichlierten Linien schematisch dargestellt sind. Die Vorderwagenstrukturen 1 mit den entsprechenden Paarungen aus Kotflügel 10 und Fronthaube 11 sowie Kotflügel 20 und Fronthaube 21 sind unterschiedlichen Fahrzeugvarianten zugeordnet, wie beispielsweise einer Limousine bzw. einem Coupé, die auf derselben Bodengruppe aufbauen. Hierbei werden für die beiden Fahrzeugtypen trotz einheitlicher Stützträger 2 unterschiedliche Fugenverläufe 12 und 22 in allen drei Raumrichtungen erreicht. Der Fahrzeugvariante "Limousine" kommt die höhere Bauform von Kotflügel 10 und Fronthauben 11 zu, während die Variante "Coupé" niedriger angesetzte Kotflügel 20 sowie eine entsprechend angepasste Fronthaube 21 aufweist. Die Fugen 12 und 22 verlaufen sowohl höhen- als auch seitenversetzt. Auch die Radausschnitte 13 und 23 in den Kotflügeln 10 und 20 verlaufen bei den beiden Fahrzeugvarianten unterschiedlich hoch.

Der einheitliche Stützträger 2 ist treppenartig abgestuft, mit im wesentlichen horizontal verlaufenden Anbindungsbereichen 14 und 24. Diese Anbindungsbereiche 14 und 24 liegen seitlich versetzt übereinander, wobei der obere Anbindungsbereich 14 in seinem fahrtrichtungsabgewandten hinteren Bereich leicht einwärts Richtung Fahrzeugmitte eingezogen ist. Auf den Anbindungsbereichen 14 und 24 sind die entsprechenden Anbindungsflansche 15 und 25 der Kotflügel 10 und 20 angesetzt. Die beiden Anbindungsbereiche 14 und 24 des Stützträgers 2 sind über eine schräg verlaufende Flanke 7 miteinander verbunden.

Selbstverständlich kann der Stützträger 2 auch eine von der dargestellten Treppenform abweichende Gestaltung aufweisen. Es können auch mehr als zwei Anbindungsbereiche vorgesehen sein. Während beim oben beschriebenen Ausführungsbeispiel die Anbindungsbereiche 14 und 24 im wesentlichen in zueinander parallelen horizontalen Ebenen verlaufen, können die Ebenen der beiden Anbindungsbereiche selbstverständlich auch schief zueinander verlaufen.

## Patentansprüche

1. Fahrzeug mit einem Stützträger (2) für einen Kotflügel (10, 20) wobei der Stützträger (2) wenigstens zwei zueinander versetzte Anbindungsbereiche (14, 24) aufweist, an denen die oberen Endbereiche, wenigstens zweier unterschiedlicher Kotflügel (10, 20) anbringbar sind, die Fahrzeugvarianten mit jeweils unterschiedlichen, an die Kotflügel (10, 20) unmittelbar angrenzenden Fronthauben (11, 21) zugeordnet sind, wobei
der Stützträger (2) treppenartig abgestuft ist, **dadurch gekennzeichnet, dass** die Anbindungsbereiche (14, 24) derart zueinander in Höhen- und Breitenrichtung des Fahrzeugs versetzt sind, dass bei einer Fahrzeugvariante die Anbindung des Kotflügels (20) tiefer und weiter außen liegend erfolgt, als bei einer anderen Fahrzeugvariante.

2. Fahrzeug nach Anspruch 1,
**dadurch gekennzeichnet, dass** die Anbindungsbereiche (14, 24) etwa horizontal verlaufen.

3. Fahrzeug nach Anspruch 1 oder 2, wobei
- die einzelnen Fahrzeugvarianten unterschiedliche Fugenverläufe (12, 22) zwischen Kotflügel (10, 20) und Fronthaube (11, 21) aufweisen, mit
- einer Fahrzeugvariante "Limousine", mit einer höheren Bauform von Kotflügel (10) und Fronthaube (11) und
- einer Fahrzeugvariante "Coupé", mit niedriger angesetzten Kotflügeln (20) und entsprechend angepassten Fronthauben (21).

## Claims

1. A vehicle with a support carrier (2) for a mudguard (10, 20), wherein the support carrier (2) has at least two mutually offset connection regions (14, 24), on which the upper end regions of at least two different mudguards (10, 20) can be mounted, which are associated with vehicle variants with respective different front bonnets (11, 21) directly adjacent to the mudguards (10, 20), the support carrier (2) being graduated in a step-like manner, **characterised in that** the connection regions (14, 24) are mutually offset in the height and width direction of the vehicle in such a way that in one vehicle variant, the connection of the mudguard (20) is located lower and further to the outside than in another vehicle variant.

2. A vehicle according to claim 1, **characterised in that** the connection regions (14, 24) extend approximately horizontally.

3. A vehicle according to claim 1 or claim 2, wherein the individual vehicle variants have different joint courses (12, 22) between the mudguard (10, 20) and front bonnet (11, 21), comprising
- a "limousine" vehicle variant, with a higher design of the mudguard (10) and front bonnet (11) and
- a "coupé" vehicle variant, with a mudguard (20) set lower and correspondingly adapted front bonnets (21).

## Revendications

1. Véhicule avec un support (2) pour une aile (10, 20) dans lequel le support présente au moins deux zones d'attache (14, 24) décalées l'une par rapport à l'autre auxquelles au moins deux ailes différentes (10, 20) peuvent être attachées, les zones supérieures d'au moins deux ailes différentes (10, 20), selon le type de véhicule, pouvant recevoir chacune des capots (11, 21) directement adjacents aux ailes, les supports d'ailes (2) étant étagées en forme de marche,
**caractérisé en ce que**
les zones d'attache (14, 24) sont décalées l'une par rapport à l'autre en direction de la hauteur et de la largeur du véhicule,
pour une variante de véhicule, l'attache de l'aile (20) se fait plus bas et plus vers l'extérieur que pour une autre variante de véhicule..

2. Véhicule selon la revendication 1,
**caractérisé en ce que**
les zones d'attache (14, 24) s'étendent a peu près horizontalement.

3. Véhicule selon la revendication 1 ou 2,
**caractérisé en ce que**
chacune des variantes de véhicule présente des courbes de jonction (12, 22) différentes entre l'aile (10, 20) et le capot (11, 21), avec
- une variante de véhicule « limousine » ayant une forme de construction plus haute des ailes (10) et du capot (11), et
- une variante de véhicule « coupé » avec des ailes (20) installées plus bas et un capot (21) adapté à celle-ci.
